# EUROPÄISCHE PATENTSCHRIFT

(11) **EP 2 299 138 B1**
(45) Veröffentlichungstag und Bekanntmachung des Hinweises auf die Patenterteilung: **08.02.2012**
(21) Anmeldenummer: 10173386.3
(22) Anmeldetag: 19.08.2010
(51) Int. Cl.: F16D 23/02

(54) **Montageeinheit für Kraftfahrzeuggetriebe**
Assembly unit for motor vehicle transmissions
Unité de montage pour boîtes de vitesse de véhicule automobile

(30) Priorität: 17.09.2009 DE 102009041930
(43) Veröffentlichungstag der Anmeldung: 23.03.2011
(73) Patentinhaber: Schaeffler Technologies GmbH & Co. KG, 91074 Herzogenaurach (DE)
(72) Erfinder: Helm, Bernd, 91480 Markt Taschendorf (DE); Kuhse, Frank, 33649 Bielefeld (DE); Schleef, Markus, 49326 Melle (DE)

(56) Entgegenhaltungen:
- EP-A1- 1 270 975
- DE-A1-102005 054 085

## Beschreibung

### Gebiet der Erfindung

Die Erfindung betrifft eine Montageeinheit für ein Kraftfahrzeuggetriebe mit einer Anzahl von Komponenten, die zur Synchronisierung eines Getriebes benötigt werden. Die Montageeinheit soll dem Kunden die Lagerung und Montage der umfassten Komponenten erleichtern.

### Hintergrund der Erfindung

Eine Montageeinheit der eingangs genannten Art ist in der DE 10 2005 040 691 A1 offenbart. Die Anordnung in der DE 10 2005 040 691 A1 umfasst eine Anzahl von mindestens zwei Synchronringen einer Synchronisierungseinrichtung, die durch ein Mittel zur verliersicheren Verbindung zusammengehalten werden. In einer Ausführung weist ein Synchroninnenring hierzu einen streifenförmig ausgebildeten und sich radial erstreckenden Stegabschnitt auf, an dessen radial äußerem Ende ein Halteabschnitt bzw. ein Haltekörper angeordnet ist. Im axialen Endbereich des Haltekörpers ist ein Halteelement angeordnet, welches einen sich radial erstreckenden, hakenartigen Vorsprung darstellt. Dieser Vorsprung reicht radial so weit, dass er ein Herausziehen des Halteabschnitts verhindert und somit die Synchronringe unverlierbar miteinander verbindet. Hierdurch kann die Anordnung aus den Synchronringen als Einheit hergestellt und geliefert werden.

Die Anordnung gemäß der DE 10 2005 040 691 A1 ist Teil einer Synchronisierungsvorrichtung, welche dem Schalten von Gangrädern bzw. der Drehzahlanpassung zwischen zu koppelnden Zahnrädern in einem Getriebe bei einem Schaltvorgang dient. Hierdurch kann der Verschleiß eines Getriebes verringert und zusätzlich der Schaltkomfort erhöht werden.

Die in der DE 10 2005 040 691 A1 offenbarte Verliersicherung ist jedoch allein zur Verbindung einer Anzahl von Synchronringen ausgebildet. Ein sicherer Transport bzw. eine vereinfachte Montage einer Montageeinheit mit einer Mehrzahl weiterer Komponenten kann durch die in der DE 10 2005 040 691 A1 offenbarte Anordnung nicht gewährleistet werden.

Die DE 10 2005 054 085 A1 zeigt eine Synchronisationseinheit, wobei mehrere Synchronringe in axialer Richtung zusammengehalten werden. Der Zusammenhalt wird in einer axialen Richtung durch eine umgebogene Lasche eines Synchronringes und in der entgegengesetzten Richtung durch die Konen der Synchronringe realisiert.

Die EP 1 270 975 offenbart eine Synchronisiereinrichtung, die in axialer Richtung wirkende Federmittel aufweist, damit eine Vorspannung zwischen dem Synchronring und dem Gleichlaufkörper erzeugt wird, um eine Relativbewegung zwischen beiden Komponenten zu vermeiden. Das Federmittel kann als Tellerfeder, Torsionsfeder, Druckfeder oder Zugfeder ausgebildet sein.

### Aufgabe der Erfindung

Es ist demnach eine Aufgabe der Erfindung, eine Montageeinheit zur Synchronisierung eines Getriebes anzugeben, welche gegenüber dem Stand der Technik verbessert ist.

### Lösung der Aufgabe

Die Aufgabe der Erfindung wird erfindungsgemäß gelöst durch eine Montageeinheit mit der Merkmalskombination gemäß Anspruch 1.

Demnach umfasst die Montageeinheit für ein Kraftfahrzeuggetriebe einen Synchronträgerkörper, wobei der Synchronträgerkörper mit einer sich in einer axialen Richtung erstreckenden Getriebewelle verbindbar ist, eine Anzahl von Vorsynchronisierungselementen, die am Außenumfang des Synchronträgerkörpers angeordnet sind, eine Schiebemuffe, einen Synchronaußenring, und eine Sicherungsklammer, die den Synchronträgerkörper, die Vorsynchronisierungselemente, die Schiebemuffe und den Synchronaußenring zusammenhält.

Die Sicherungsklammer ist insbesondere derart ausgestaltet, dass sie sich nach der Montage auf einer Getriebewelle einfach von der Montageeinheit entfernen lässt, ohne dass die einzelnen Komponenten sich gegeneinander verschieben. Bevorzugt weist die Sicherungsklammer demnach wenigstens ein sich radial nach außen erstreckendes Abziehelement zum Entfernen der Sicherungsklammer nach der Montage auf. Durch eine derartige Anordnung kann gewährleistet werden, dass die auf der Welle zu montierenden Komponenten in keinem Fall vor der Montage gegeneinander verrutschen können und dass nach der Montage ein einfaches Entfernen der Sicherungsklammer möglich ist.

In einem ersten Schritt geht die Erfindung von der Tatsache aus, dass die Komponenten einer Synchronisierungsvorrichtung bislang eher separat an einen Kunden geliefert werden und erst dort vor der Montage bzw. der Verbauung zusammengebracht werden. Der sich ergebende Aufwand für den Transport und die sich anschließende Montage der Komponenten auf einer Getriebewelle ebenso wie die Arbeitskosten sind hierbei hoch.

In einem zweiten Schritt geht die Erfindung von der Überlegung aus, dass bei der gemeinsamen Lieferung einzelner Komponenten einer Montageeinheit die Transportkosten und der Aufwand gesenkt werden können. Allerdings können die beispielsweise in einem gemeinsamen Behälter gelieferten Komponenten bei einem nicht fachgemäßen Transport oder bei der Montage auseinanderfallen, was wiederum zu einem unerwünschten Mehraufwand für den Kunden führt. Insbesondere kann sich beispielsweise eine Schiebemuffe einer Montageeinheit gegen den Synchronträgerkörper derart verschieben, dass sich Vorsynchronisierungselemente, die zwischen diesen beiden Komponenten angeordnet sind, aus der Einheit lösen können. Die Vorsynchronisierungselemente können im ungünstigsten Fall in ein Getriebegehäuse fallen, so dass eine schnelle und sichere Montage nicht möglich ist.

In einem dritten Schritt nutzt die Erfindung schließlich die Erkenntnis aus, dass die vorgenannten Nachteile dadurch umgangen werden können, indem eine Sicherungsklammer verwendet wird, die den Synchronträgerkörper, die Schiebemuffe, die Vorsynchronisierungselemente und einen Synchronaußenring gemeinsam zusammenhält. Durch eine derartige Sicherungsklammer können die einzelnen Komponenten sicher bis zum Kunden transportiert werden. Weiterhin kann eine problemlose und einfache Anbringung einer Montageeinheit in einem Getriebe gewährleistet werden, da die einzelnen Komponenten bis zur Montage auf der Getriebewelle aneinander in der gewünschten Positionierung fixiert sind.

Überraschenderweise bietet eine Sicherungsklammer demnach eine kostengünstige und einfache Möglichkeit, eine Montageeinheit mit einem Synchronträgerkörper, einer Schiebemuffe, Vorsynchronisierungselementen und einem Synchronaußenring zu liefern, die einfach zu transportieren ist und auch bei der Endmontage gegen ein Auseinanderfallen abgesichert ist. Die Montageeinheit wird als Ganzes auf der Getriebewelle montiert. Es wird insbesondere verhindert, dass die Vorsynchronisierungselemente in das Getriebegehäuse fallen.

Die Sicherungsklammer kann grundsätzlich beliebig ausgestaltet sein. Sie kann beispielsweise mehrteilig oder insbesondere einstückig als ein Tiefziehteil gefertigt sein. Die Sicherungsklammer kann beispielsweise als eine Kappe mit Schenkeln ausgestaltet sein, die die einzelnen genannten Komponenten der Montageeinheit über eine Klemmung oder ein Zusammenpressen zusammenhalten. Eine Klemmung kann beispielsweise durch einen verengten Raum zwischen zwei Schenkeln der Sicherungsklammer erreicht werden und beispielsweise durch ein gemeinsames Einpressen der einzelnen Komponenten in die Sicherungsklammer erfolgen.

Der von der Montageeinheit umfasste Synchronträgerkörper dient der Übertragung des Drehmoments und der Drehzahl von einer Getriebewelle auf die Schiebemuffe. Er kann eine Verzahnung aufweisen, die die axiale Verschiebung der Schiebemuffe und des Synchronträgerkörpers zueinander ermöglicht. Der Synchronträgerkörper kann beispielsweise durch Sintern oder durch eine spanende Bearbeitung von Rohlingen hergestellt werden. Er bildet zusammen mit den Vorsynchronisierungselementen und der Schiebemuffe eine sogenannte Schiebemuffen-Einheit.

Die Schiebemuffe kann das Drehmoment und die Drehzahl eines Synchronträgerkörpers zu einem Gangrad und somit eine axiale Schaltkraft auf die Vorsynchronisierungselemente und die Synchronringe übertragen. Die Schiebemuffe ist insbesondere mit einer Führungsverzahnung ausgestaltet, die sich beispielsweise an ihrem Innenumfang befindet. Die Schiebemuffe kann beispielsweise durch spanende Verfahren oder besonders effektiv spanlos durch ein Umform-Verfahren hergestellt werden.

Die Vorsynchronisierungselemente sind insbesondere in Aussparungen bzw. in Rampenkonturen am Umfang des Synchronträgerkörpers angeordnet. Sie können einteilig oder mehrteilig ausgebildet sein. Bei einer mehrteiligen Ausführung besteht ein Vorsynchronisierungselement beispielsweise aus einem Grund- bzw. Druckkörper, einer Feder und einer Führungsfläche bzw. Druckplatte. Die Vorsynchronisierungselemente können so mittels ihrer Federn gegen eine Aussparung in der Führungsverzahnung einer Schiebemuffe vorgespannt sein.

Der Synchronaußenring kann mit einer Sperrverzahnung an seinem Innenumfang ausgebildet sein. Er ist beispielsweise aus einem kaltumgeformten Stahl gefertigt, bei dem die erforderlichen Reibwerte durch eine passende Beschichtung, wie beispielsweise einer Carbon-Beschichtung, erreicht werden können.

Durch die vorgespannten Vorsynchronisierungselemente kann eine Vorsynchronisation der Drehzahlen eines Gangrads mit einer Getriebewelle erreicht werden. Die Vorsynchronisierungselemente werden bei einem Verschieben der Schiebemuffe axial ausgelenkt und drücken hierbei den Synchronring gegen einen Kupplungskörper des Gangrades. Der Synchronring nimmt hierbei das Gangrad mit. Die eigentliche Synchronisation erfolgt dann durch eine sogenannte Kegel-Reibkupplung am Kupplungskörper bzw. am Synchronring. Ein Drehmoment kann über die Führungsverzahnung der Schiebemuffe übertragen werden, die im geschalteten Zustand das Gangrad und den Synchronträgerkörper bzw. der Welle verbindet.

Die Erfindung koppelt den Synchronträgerkörper, die Schiebemuffe, Vorsynchronisierungselemente und den Synchronaußenring, die zur Synchronisation eines Getriebes benötigt werden, durch die Verwendung einer Sicherungsklammer aneinander. So können die Komponenten, zusammen auf einer Welle montiert werden, wodurch sowohl der Transport als auch die sich anschließende Montage beim Kunden erleichtert wird.

Vorteilhafterweise hält eine Sicherungsklammer den Synchronträgerkörper, die Vorsynchronisierungselemente, die Schiebemuffe und den Synchronaußenring axial zusammen. Die einzelnen Komponenten werden durch die derart angebrachte Sicherungsklammer zum Einen fest zusammengehalten und schon während eines Transports oder einer eventuellen Lagerung gegen ein Verrutschen gesichert. Zum Anderen kann durch den axialen Zusammenhalt ein einfacherer konstruktiver Aufbau ermöglicht werden. Zusätzlich kann durch die axiale Verbindung der vorgenannten Komponenten ein leichteres Entfernen der Sicherungsklammer in radialer Richtung nach der Montage auf einer Getriebewelle gewährleistet werden.

In einer vorteilhaften Ausgestaltung umläuft die Sicherungsklammer den Synchronträgerkörper, die Vorsynchronisierungselemente, die Schiebemuffe und den Synchronaußenring kappenförmig zumindest teilweise in Umlaufrichtung. Bevorzugt wird dabei insbesondere ein Winkelbereich von weniger als 180° umlaufen. Hierdurch ist ein einfaches Abziehen der Sicherungskammer in radialer Richtung möglich.

Bevorzugt weist die Sicherungsklammer sich radial nach innen erstreckenden Wandungen auf, zwischen denen der Synchronträgerkörper, die Vorsynchronisierungselemente, die Schiebemuffe und der Synchronaußenring durch einen axialen Presssitz gehalten sind. Hierdurch sind die einzelnen Komponenten bis zur Endmontage sicher und fest aneinander gehalten. Ein Herausfallen der Vorsynchronisierungselemente ist beispielsweise dank eines derartigen Zusammenhaltes zwischen den Wandungen der Sicherungsklammer nicht zu befürchten. Weiterhin bietet der durch den axialen Presssitz gegebene Halt der einzelnen Komponenten in der Sicherungsklammer ein einfaches Zusammenfügen der Montageeinheit.

In einer besonders vorteilhaften Ausgestaltung der Erfindung erstrecken sich die Wandungen in nach unten ausgebildete Schenkel. Die Schenkel erstrecken sich radial weiter nach innen und bieten so insbesondere die Möglichkeit, die vorgenannten Komponenten der Montageeinheit zusätzlich im Innenbereich in der Nähe der Positionierungsstelle einer Getriebewelle zusammenzuhalten und zu stabilisieren. Der Abstand zwischen den axial beabstandeten Schenkeln kann entsprechend der in der Sicherungsklammer gehaltenen Anzahl und der Abmessungen der Komponenten gewählt sein.

Bevorzugt ist eine Nut auf dem Außenumfang der Schiebemuffe vorgesehen, wobei die Sicherungsklammer wenigstens eine radial nach innen geformte Haltenocke zum Eingriff in die Nut aufweist. Die Nut, die üblicherweise dem Eingriff einer Schaltgabel dient, kann so besonders vorteilhaft für die Anbringung der Sicherungsklammer genutzt werden. Durch die Positionierung der Sicherungsklammer auf der Schiebemuffe kann eine Haltenocke als zusätzliche Sicherung dienen, damit die Sicherungsklammer nicht von der Montageeinheit abrutscht. Insbesondere kann die Haltenocke auch als ein durchgehender Steg ausgebildet sein. Denkbar sind grundsätzlich auch mehrere Haltenocken, die in die Nut eingreifen können.

Grundsätzlich kann die Sicherungsklammer aus verschiedenen Materialien gefertigt sein. In einer vorteilhaften Ausgestaltung der Erfindung ist die Sicherungsklammer insbesondere aus einem Kunststoff gefertigt. Durch die Verwendung eines Kunststoffes kann eine erhöhte Flexibilität gewährleistet werden. Eine Sicherungsklammer aus Kunststoff bewirkt beispielsweise nur eine geringe Erhöhung des Gewichts der Montageeinheit, so dass die Transportkosten sich kaum erhöhen. Weiterhin kann eine Sicherungsklammer in einfach zu handhabenden Prozessen, wie beispielsweise in einem Umformverfahren oder einem Gießverfahren gefertigt werden.

Bevorzugt sind zwei Synchronaußenringe umfasst, die von der Sicherungsklammer axial zusammengehalten werden. Hierdurch wird die Montageeinheit um eine zusätzliche Komponente erweitert. Es ist auch möglich, weitere Synchronringe, wie beispielsweise Synchroninnen- oder Synchronzwischenringe als zusätzliche Komponenten einer Montageeinheit zuzufügen und diese zusammenzuhalten. In diesem Fall kann die Sicherungsklammer in Hinblick auf ihre Abmessungen, also dem lichten Innenabstand zwischen den Schenkeln, den Abmessungen der Montageeinheit angepasst werden.

### Kurze Beschreibung der Zeichnung

Im Folgenden werden Ausführungsbeispiele der Erfindung anhand einer Zeichnung näher erläutert. Dabei zeigen:
- Fig. 1: eine schematische Darstellung einer Montageeinheit im Quer- schnitt, umfassend einen Synchronträgerkörper, Vorsynchronisie- rungselemente, eine Schiebemuffe und zwei Synchronaußenrin- ge, die axial von einer Sicherungsklammer zusammengehalten werden,
- Fig. 2: einen Längsschnitt durch ein Vorsynchronisierungselement der Montageeinheit gemäß Fig. 1,
- Fig. 3: eine dreidimensionale Darstellung einer Montageeinheit, umfas- send einen Synchronträgerkörper, Vorsynchronisierungselemen- te, eine Schiebemuffe und einen Synchronaußenring, die axial von einer Sicherungsklammer zusammengehalten werden, und
- Fig. 4: eine separate dreidimensionale Darstellung der Sicherungsklam- mer gemäß Fig. 3.

Gleiche Komponenten in den Ausführungsbeispielen der Zeichnung erhalten im Folgenden die gleichen Bezugszeichen.

### Ausführliche Beschreibung der Zeichnung

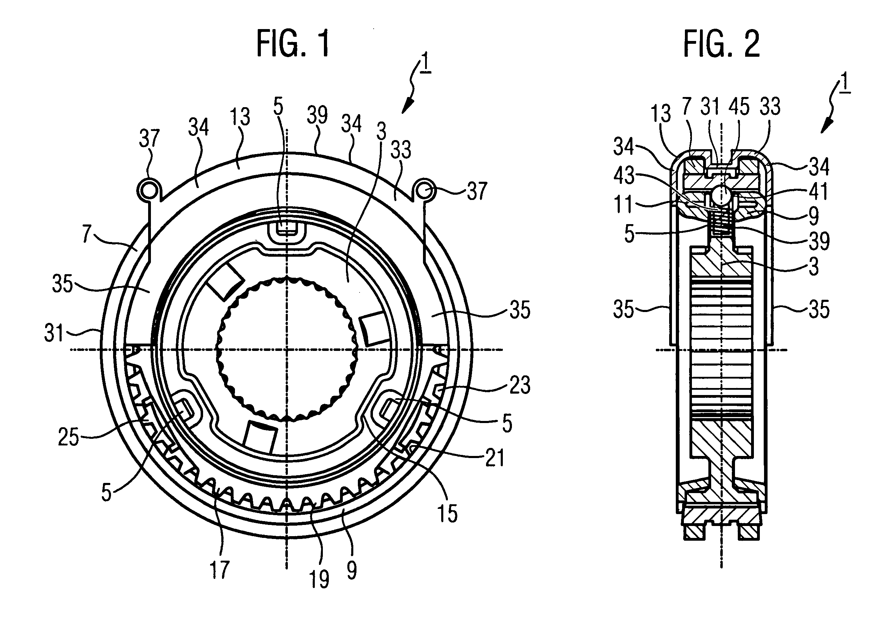

Fig. 1 zeigt eine schematische Darstellung der Montageeinheit 1 im Querschnitt. Die Montageeinheit 1 weist einen Synchronträgerkörper 3, drei Vorsynchronisierungselemente 5, eine Schiebemuffe 7 und zwei Synchronaußenringe 9, 11 auf, die von einer Sicherungsklammer 13 axial zusammengehalten werden. In Fig. 1 ist aufgrund der Darstellung nur ein Synchronring 9 zu sehen, die Anordnung beider Synchronringe 9, 11 ist der Fig. 2 zu entnehmen. Der Synchronträgerkörper 3, die Vorsynchronisierungselemente 5 und die Schiebemuffe 7 bilden eine sogenannte Schiebemuffeneinheit.

Der Synchronträgerkörper 3 kann formschlüssig mit einer in Fig. 1 nicht gezeigten Getriebewelle verbunden werden. Zwischen dem Synchronträgerkörper 3 und der Schiebemuffe 7 sind die Vorsynchronisierungselemente 5 gehalten. Jedes der drei Vorsynchronisierungselemente 5 ist aus drei Komponenten gefertigt. Der genannte Aufbau ist aus Fig. 2 ersichtlich. Bei einem Gangwechsel haben ein Gangrad und die Getriebewelle, auf welchem sich die Montageeinheit im Einbauzustand befindet, unterschiedliche Drehzahlen. Beim Verschieben der Schiebemuffe 7 werden die Vorsynchronisierungselemente 5 axial ausgelenkt und drücken den Synchronaußenring 9 gegen den Kupplungskörper des Gangrades. Hierdurch werden die Drehzahlen vorsynchronisiert.

Die Vorsynchronisierungselemente 5 sind in Aussparungen 15 der Sperrverzahnung 17 des Synchronträgerkörpers 3 an seinem Außenumfang 19 positioniert. Die Schiebemuffe 7 hat eine Führungsverzahnung 21 an Ihrem Innenumfang 23 auf, die ebenfalls Aussparungen 25 aufweist. Mittels dieser Aussparungen 25 werden die Vorsynchronisierungselemente 5 zentriert.

Die Synchronaußenringe 9, 11 bilden in axialer Richtung jeweils die äußeren Teile der Montageeinheit 1. Sie sind an ihrem Außenumfang 27 mit einer Sperrverzahnung 28 versehen, die in Richtung der Schiebemuffe 7 gerichtet ist. Die Synchronaußenringe 9, 11 dienen der Synchronisation, also dem Angleichen der unterschiedlichen Drehzahlen eines Gangrads und einer Getriebewelle durch eine sogenannte Kegel-Reibkupplung. Erst im Anschluss kann das Gangrad formschlüssig mit der Getriebewelle verbunden werden.

Die Schiebemuffe 7 ist auf dem Außenumfang 29 mit einer Nut 31 versehen. Diese für den Eingriff einer Schaltgabel vorgesehene Nut 31 wird für den Eingriff der Sicherungsklammer 13 genutzt. Die Nut 31 ist in Fig. 2 gut zu entnehmen. Die Schiebemuffe 7 überträgt das Drehmoment und die Drehzahl vom Synchronträgerkörper 3 zum Gangrad. Sie ist spanlos durch ein Umform-Verfahren hergestellt.

Die einzelnen Komponenten der Montageeinheit werden durch eine aus Kunststoff gefertigte Sicherungsklammer 13 zusammengehalten. Die Sicherungsklammer 13 hält die Schiebemuffeneinheit und die Synchronaußenringe 9, 11 axial zusammen und umläuft diese teilweise kappenförmig in Umlaufrichtung. Die Sicherungsklammer 13 ist in Form einer sich radial nach innen erstreckenden Wandungen 34 ausgebildet, zwischen denen die Schiebemuffeneinheit und die Synchronaußenringe 9, 11 durch axialen Presssitz gehalten sind. Die Wandungen 34 der Sicherungsklammer 13 erstrecken sich in nach unten ausgebildete Schenkel 35 erstrecken. Durch diese Ausgestaltung der Sicherungsklammer 13 wird ein sicherer Zusammenhalt der einzelnen Komponenten gewährleistet.

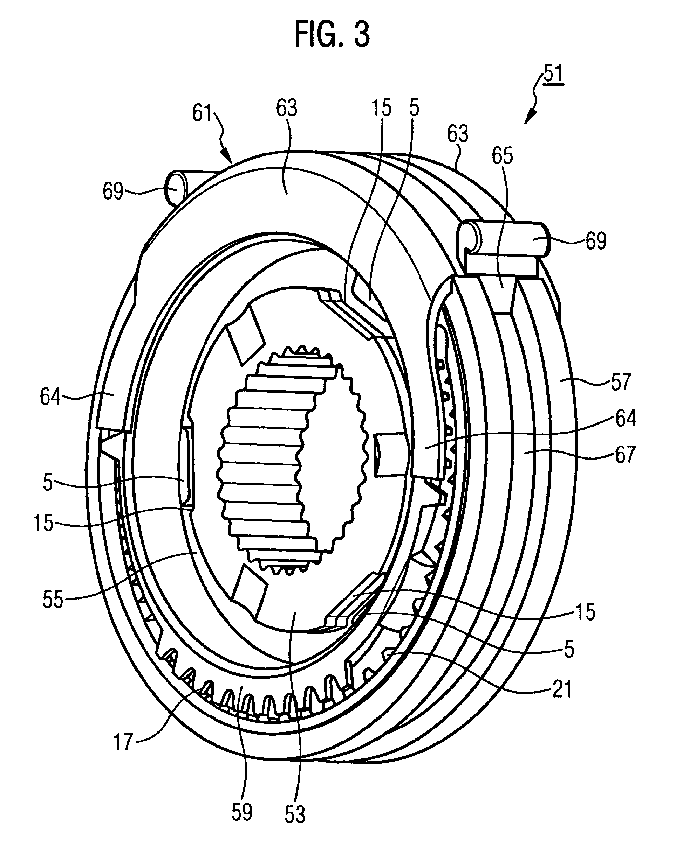

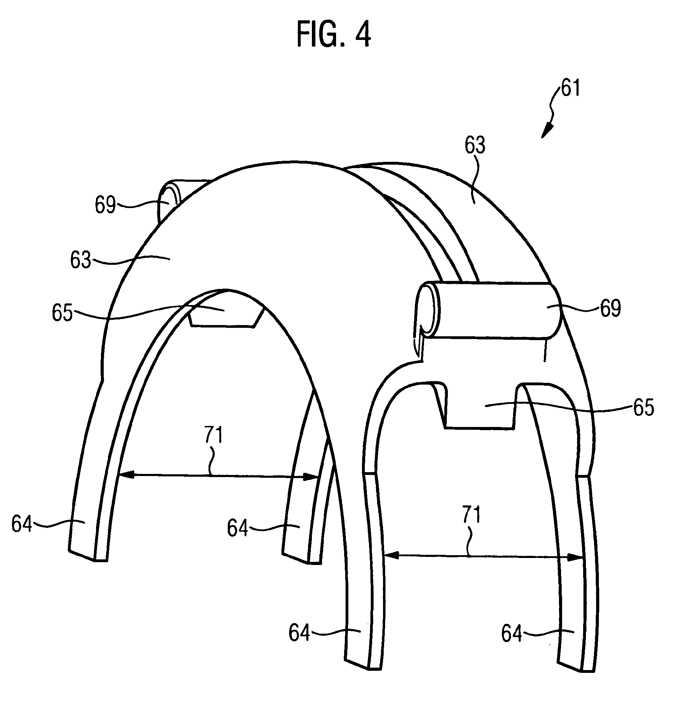

Die Sicherungsklammer 13 hat zusätzlich eine radial nach innen geformte, als durchgehender Steg ausgebildete Haltenocke zum Eingriff in die Nut 31. Diese Haltenocke ist aufgrund der der Darstellung aus Fig. 1 nicht zu ersehen, kann aber den Fig. 3 und 4. Gut entnommen werden. Bei einer Positionierung der Sicherungsklammer 13 auf der Schiebemuffe 7 kann die Haltenocke als zusätzliche Sicherung dienen, damit die Sicherungsklammer 13 nicht von der Montageeinheit 1 abrutscht.

Weiterhin ist die Sicherungsklammer 13 mit zwei sich radial nach außen erstreckenden Abziehelementen 37 ausgestaltet. Diese Abziehelemente 37 sind auf dem Außenumfang 39 der Sicherungsklammer 13 angebracht und bieten die Möglichkeit zum einfachen Entfernen der Sicherungsklammer 13 nach der Montage der Montageeinheit auf einer Getriebewelle.

In Fig. 2 ist ein Längsschnitt durch ein Vorsynchronisierungselement 5 der Montageeinheit 1 gemäß Fig. 1 zu sehen. Die Montageeinheit weist einen Synchronträgerkörper 3, drei Vorsynchronisierungselemente 5, eine Schiebemuffe 7 und zwei Synchronaußenringe 9, 11 auf. Diese Komponenten werden von der Sicherungsklammer 13 zusammengehalten. Aufgrund der Darstellung ist in Fig. 2 nur ein Vorsynchronisierungselement 5 zu sehen. Die Vorsynchronisierungselemente 5 sind einteilig ausgeführt und bestehen jeweils aus einer aus einem Grundkörper 41, einer Feder 43 und einer Führungsfläche 45 mit einem Kugelkörper. Die Führungsfläche 45 ist großflächig ausgebildet und bietet dadurch eine besonders gute axiale Führung. Weiterhin wird hierdurch die Gefahr der Verkippung minimiert.

Fig. 3 zeigt eine weitere Montageeinheit 51 in einer dreidimensionalen Darstellung. Die Montageeinheit 51 umfasst einen Synchronträgerkörper 53, drei Vorsynchronisierungselemente 55 und eine Schiebemuffe 57. Im Unterschied zu den Fig. 1 und 2 weist die Montageeinheit 51 nur einen Synchronaußenring 59 auf. Alle vorgenannten Komponenten werden axial von einer Sicherungsklammer 61 zusammengehalten. Die Montageeinheit 51 ist auf einer nicht gezeigten Getriebewelle montierbar.

Die Sicherungsklammer 61 ist als eine Kappe mit sich radial nach innen erstreckenden Wandungen 63 ausgebildet, wobei sich die Wandungen 63 in vier sich radial nach unten ausgebildeten Schenkeln 64 erstrecken. Die Sicherungsklammer 61 umläuft die Komponenten der Montageeinheit 51 kappenförmig. Die Schenkel 64 der Sicherungsklammer 61 sind besonders gut in Fig. 4 zu sehen. Innerhalb Sicherungsklammer 61 sind der Synchronträgerkörper 53, die Vorsynchronisierungselemente 55, die Schiebemuffe 57 und der Synchronaußenring 59 zusammengehalten.

Man erkennt in Fig. 3 deutlich den Eingriff der an der Sicherungsklammer radial nach innen geformten Haltenocke 65 in die Nut 67 der Schiebemuffe 57. Die Haltenocke 65 ist als ein durchgehender Steg ausgebildet. Ebenfalls weist die Sicherungsklammer 61 zwei Abziehelemente 69 auf, die es ermöglichen, die Sicherungsklammer 61 nach der Montage auf einer Getriebewelle von den übrigen Komponenten zu entfernen.

In Fig. 4 ist die Sicherungsklammer 61 aus Fig. 3 separat dargestellt. Gut sind nun die vier sich radial nach innen erstreckenden Schenkel 64 der Sicherungsklammer 61 zu erkennen. Die Schenkel erstrecken sich von den Wandungen 63. Die Sicherungsklammer 61 ist derart ausgebildet, dass sie eine Schiebemuffeneinheit und, je Vorspannung der Schenkel 64 und der Wandungen 63 eine Anzahl von Synchronringen oder speziell auch Synchronaußenringen durch axialen Presssitz halten können. Der lichte Innenabstand 71 zwischen den Schenkeln 64 kann dementsprechend der jeweiligen Montageeinheit 1, 51 angepasst, also vergrößert oder verringert werden.

### Liste der Bezugszahlen

- 1: Montageeinheit
- 3: Synchronträgerkörper
- 5: Vorsynchronisierungselemente
- 7: Schiebemuffe
- 9: Synchronaußenring
- 11: Synchronaußenring
- 13: Sicherungsklammer
- 15: Aussparungen
- 17: Verzahnung
- 19: Außenumfang
- 21: Führungsverzahnung
- 23: Innenumfang
- 25: Aussparungen
- 27: Außenumfang
- 28: Sperrverzahnung
- 29: Außenumfang
- 31: Nut
- 34: Wandung
- 35: Schenkel
- 37: Abziehelemente
- 39: Außenumfang
- 41: Grundkörper
- 43: Feder
- 45: Kugelkörper
- 51: Montageeinheit
- 53: Synchronträgerkörper
- 55: Vorsynchronisierungselemente
- 57: Schiebemuffe
- 59: Synchronaußenring
- 61: Sicherungsklammer
- 63: Wandung
- 64: Schenkel
- 65: Haltenocke
- 67: Nut
- 69: Abziehelemente
- 71: Innenabstand

## Patentansprüche

1. Montageeinheit (1, 51) für ein Kraftfahrzeuggetriebe, umfassend einen Synchronträgerkörper (3, 53), der mit einer sich in einer axialen Richtung erstreckenden Getriebewelle verbindbar ist, eine Anzahl von Vorsynchronisierungselementen (5, 55), die am Außenumfang (19) des Synchronträgerkörpers (3, 53) angeordnet sind, eine Schiebemuffe (7, 57), einen Synchronaußenring (9, 11, 59), und eine Sicherungsklammer (13, 61), die den Synchronträgerkörper (3, 53), die Vorsynchronisierungselemente (5, 55), die Schiebemuffe (7, 57) und den Synchronaußenring (9, 11, 59) zusammenhält, **dadurch gekennzeichnet, dass** die Sicherungsklammer (13, 61) ein sich radial nach außen erstreckendes Abziehelement (37, 69) zum Entfernen der Sicherungsklammer (13, 61) nach der Montage aufweist.

2. Montageeinheit (1, 51) nach Anspruch 1, wobei die Sicherungsklammer (13, 61) den Synchronträgerkörper (3, 53), die Vorsynchronisierungselemente (5, 55), die Schiebemuffe (7, 57) und den Synchronaußenring (9, 11, 59) axial zusammenhält.

3. Montageeinheit (1, 51) nach einem der Ansprüche 1 oder 2, wobei die Sicherungsklammer (13, 61) den Synchronträgerkörper (3, 53), die Vorsynchronisierungselemente (5, 55), die Schiebemuffe (7, 57) und den Synchronaußenring (9, 11, 59) kappenförmig zumindest teilweise in Umlaufrichtung umläuft.

4. Montageeinheit (1, 51) nach einem der vorhergehenden Ansprüche, wobei die Sicherungsklammer (13, 61) sich radial nach innen erstreckenden Wandungen (34, 63) aufweist, zwischen denen der Synchronträgerkörper (3, 53), die Vorsynchronisierungselemente (5, 55), die Schiebemuffe (7, 57) und der Synchronaußenring (9, 11, 59) durch einen axialen Presssitz gehalten sind.

5. Montageeinheit (1, 51) nach Anspruch 4, wobei die Wandungen (34, 63) sich in nach unten ausgebildete Schenkel (35, 64) erstrecken.

6. Montageeinheit (1, 51) nach einem der vorhergehenden Ansprüche, wobei eine Nut (31, 67) auf dem Außenumfang (29) der Schiebemuffe (7, 57) vorgesehen ist und wobei die Sicherungsklammer (13, 61) wenigstens eine radial nach innen geformte Haltenocke (65) zum Eingriff in die Nut (31, 67) aufweist.

7. Montageeinheit (1, 51) nach einem der vorhergehenden Ansprüche, wobei die Sicherungsklammer (13, 61) aus einem Kunststoff besteht.

8. Montageeinheit (1, 51) nach einem der vorhergehenden Ansprüche, wobei zwei Synchronaußenringe (9, 11, 59) umfasst sind, die von der Sicherungsklammer (13, 61) axial zusammengehalten werden.

## Claims

1. Assembly unit (1, 51) for a motor vehicle gearbox, comprising a synchronizer carrier body (3, 53) which can be connected to a gearbox shaft which extends in an axial direction, a number of pre-synchronization elements (5, 55) which are arranged on the outer circumference (19) of the synchronizer carrier body (3, 53), a sliding sleeve (7, 57), a synchronizer outer ring (9, 11, 59) and a securing clamp (13, 61) which holds together the synchronizer carrier body (3, 53), the pre-synchronization elements (5, 55), the sliding sleeve (7, 57) and the synchronizer outer ring (9, 11, 59), **characterized in that** the securing clamp (13, 61) has a radially outwardly extending pull-off element (37, 69) for the removal of the securing clamp (13, 61) after assembly.

2. Assembly unit (1, 51) according to Claim 1, wherein the securing clamp (13, 61) axially holds together the synchronizer carrier body (3, 53), the pre-synchronization elements (5, 55), the sliding sleeve (7, 57) and the synchronizer outer ring (9, 11, 59).

3. Assembly unit (1, 51) according to either of Claims 1 and 2, wherein the securing clamp (13, 61) runs at least partially around the synchronizer carrier body (3, 53), the pre-synchronization elements (5, 55), the sliding sleeve (7, 57) and the synchronizer outer ring (9, 11, 59) in the direction of rotation in the manner of a cap.

4. Assembly unit (1, 51) according to one of the preceding claims, wherein the securing clamp (13, 61) has radially inwardly extending walls (34, 63) between which the synchronizer carrier body (3, 53), the pre-synchronization elements (5, 55), the sliding sleeve (7, 57) and the synchronizer outer ring (9, 11, 59) are held with an axial interference fit.

5. Assembly unit (1, 51) according to Claim 4, wherein the walls (34, 63) extend into downwardly formed limbs (35, 64).

6. Assembly unit (1, 51) according to one of the preceding claims, wherein a groove (31, 67) is provided on the outer circumference (29) of the sliding sleeve (7, 57), and wherein the securing clamp (13, 61) has at least one radially inwardly formed retaining cam (65) for engaging into the groove (31, 67).

7. Assembly unit (1, 51) according to one of the preceding claims, wherein the securing clamp (13, 61) is composed of a plastic.

8. Assembly unit (1, 51) according to one of the preceding claims, wherein it comprises two synchronizer outer rings (9, 11, 59) which are axially held together by the securing clamp (13, 61).

## Revendications

1. Unité de montage (1, 51) pour une boîte de vitesses de véhicule automobile, comprenant un corps de support synchrone (3, 53), qui peut être connecté à un arbre de boîte de vitesses s'étendant dans une direction axiale, un certain nombre d'éléments de pré-synchronisation (5, 55), qui sont disposés sur la périphérie extérieure (19) du corps de support synchrone (3, 53), un manchon coulissant (7, 57), une bague extérieure synchrone (9, 11, 59), et une pince de fixation (13, 61), qui maintient ensemble le corps de support synchrone (3, 53), les éléments de pré-synchronisation (5, 55), le manchon coulissant (7, 57) et la bague extérieure synchrone (9, 11, 59), **caractérisée en ce que** la pince de fixation (13, 61) présente un élément d'extraction (37, 69) s'étendant radialement vers l'extérieur pour enlever la pince de fixation (13, 61) après le montage.

2. Unité de montage (1, 51) selon la revendication 1, dans laquelle la pince de fixation (13, 61) maintient axialement ensemble le corps de support synchrone (3, 53), les éléments de pré-synchronisation (5, 55), le manchon coulissant (7, 57), et la bague extérieure synchrone (9, 11, 59).

3. Unité de montage (1, 51) selon l'une quelconque des revendications 1 ou 2, dans laquelle la pince de fixation (13, 61) entoure au moins en partie, dans la direction périphérique et en forme de capuchon, le corps de support synchrone (3, 53), les éléments de pré-synchronisation (5, 55), le manchon coulissant (7, 57) et la bague extérieure synchrone (9, 11, 59).

4. Unité de montage (1, 51) selon l'une quelconque des revendications précédentes, dans laquelle la pince de fixation (13, 61) présente des parois (34, 63) s'étendant radialement vers l'intérieur, entre lesquelles le corps de support synchrone (3, 53), les éléments de pré-synchronisation (5, 55), le manchon coulissant (7, 57) et la bague extérieure synchrone (9, 11, 59) sont maintenus par un ajustement serré axial.

5. Unité de montage (1, 51) selon la revendication 4, dans laquelle les parois (34, 63) s'étendent dans des branches (35, 64) réalisées vers le bas.

6. Unité de montage (1, 51) selon l'une quelconque des revendications précédentes, dans laquelle une rainure (31, 67) est prévue sur la périphérie extérieure (29) du manchon coulissant (7, 57) et dans laquelle la pince de fixation (13, 61) présente au moins une came de retenue (65) formée radialement vers l'intérieur pour l'engagement dans la rainure (31, 67).

7. Unité de montage (1, 51) selon l'une quelconque des revendications précédentes, dans laquelle la pince de fixation (13, 61) se compose d'un plastique.

8. Unité de montage (1, 51) selon l'une quelconque des revendications précédentes, dans laquelle deux bagues extérieures synchrones (9, 11, 59) sont prévues, lesquelles sont maintenues ensemble axialement par la pince de fixation (13, 61).
